# EUROPEAN PATENT SPECIFICATION

(11) **EP 2 841 842 B1**
(45) Date of publication and mention of the grant of the patent: **25.05.2016**
(21) Application number: 13703922.8
(22) Date of filing: 16.01.2013
(51) Int. Cl.: F17C 1/00

(54) **HIGH PRESSURE CONTAINMENT VESSEL**
HOCHDRUCKRÜCKHALTUNGSGEHÄUSE
RÉCIPIENT DE CONFINEMENT HAUTE PRESSION

(30) Priority: 23.04.2012 US 201261636758 P
(43) Date of publication of application: 04.03.2015
(73) Proprietor: Parker Hannifin Corporation, Cleveland, OH 44124 (US); Sutterfield, Matthew, Greenfield, Tennessee 38230 (US); Paschall, Tony, Greenfield, Tennessee 38230 (US); Rash, Paul, Greenfield, Tennessee 38230 (US)
(72) Inventor: SUTTERFIELD, Matthew, Greenfield, Tennessee 38230 (US); PASCHALL, Tony, Greenfield, Tennessee 38230 (US); RASH, Paul, Greenfield, Tennessee 38230 (US)
(74) Representative: Belcher, Simon James
(86) International application number: PCT/US2013/021679
(87) International publication number: WO 2013/162655

(56) References cited:
- WO-A1-89/00658
- DE-C- 761 221
- DE-U1- 9 102 936
- US-A- 3 439 405
- US-A1- 2008 142 523

## Description

The present invention relates to vessels, for example, pressure containment vessels, which may be used to house components in a heating, ventilation, air conditioning and refrigeration ("HVACR") system.

Pressure containment vessels are used in a variety of applications. In some high pressure applications, it is necessary to reinforce the outer walls of the pressure vessel.

Conventionally, the outer wall of the pressure vessel can be reinforced by wrapping the vessel with one or more layers of a rigid material (e.g., sheet metal) or by joining metal parts or segments to form an outer shell that surrounds the vessel. These techniques have some drawbacks, including, for example, difficulties with bending or forming the sheet metal around the vessel and difficulties caused by non-uniform material thicknesses which may make it difficult to closely surround the vessel with the reinforcement layer. Gaps between the reinforcement layer and the outer wall of the vessel are potential points of failure where the vessel may burst or crack. Additionally, such reinforcement techniques tend to be labour intensive.

As an alternative, the pressure vessel can be reinforced with a flexible or composite material, for example, a fibre reinforced material. This technique can add expense to the manufacturing process both in the form of costly materials and reduced manufacturing efficiency due to the general difficulty of working with such materials and increased time of assembly.

Another alternative for reinforcing pressure vessels is to increase the thickness of the outer wall of the vessel. This technique may not be suitable for some pressure vessels due to increased cost of raw materials and overall difficulties in working with thicker materials.

HVACR systems typically utilize pressure containment vessels (typically smaller-scale) that are spun from a copper tube. Such vessels can house various components of the system, such as check valves and/or filter/driers. Conventional HVACR systems use hydrofluorocarbon refrigerants that operate at pressures (e.g., less than about 1.38 to 2.07 MPa (200 to 300 psi)) that are substantially below the burst pressure of a spun copper pressure containment vessel. In such systems, a spun copper pressure containment vessel is strong enough to provide adequate burst protection.

In recent years, there has been a push towards the use of refrigerants that are more environmentally friendly than conventional hydrofluorocarbon refrigerants. One such refrigerant is carbon dioxide. The use of carbon dioxide as a refrigerant requires the HVACR system to operate at significantly higher pressures (e.g., up to 10.3 MPa (1500 psi)) as compared to the pressures in systems that use conventional hydrofluorocarbon refrigerants. To accommodate such refrigerants, the components of the system must be certified up to pressures in excess of 14.5 MPa (2100 psi). At such high pressures, larger-diameter components of the system, such as pressure containment vessels, can experience significantly higher hoop stresses than conventional HVACR systems were ever expected to tolerate.

Conventional reinforcement techniques may not be suitable for reinforcing pressure containment vessels in such systems. For example, along with other drawbacks, manufacturing costs may make it unreasonable or impractical to wrap the pressure containment vessel with one or more sheet metal or fibre-reinforced layers. Furthermore, as noted above, pressure containment vessels in HVACR systems typically are spun from a copper tube. While it may be possible to achieve necessary burst strengths by forming the containment vessel from thick-walled copper, such material may be difficult and/or expensive to obtain and also significantly more difficult to machine. Difficulties in machining, especially by spinning can lead to premature wear of tooling and decreased manufacturing productivity.

Additionally, a pressure containment vessel formed from a heavy-walled copper can be difficult to braze during installation of a HVACR system. When spun from heavy-walled copper, the ends of the pressure containment vessel, which form connections with the other components of the system, can be significantly thicker than conventional pressure containment vessels. The thick ends can function as heat sinks during the brazing process, making it difficult to form a reliable brazed connection. Furthermore, additional heat may be required to form the brazed connection. This can result in damage to the other components of the system, including, for example, components inside the pressure containment vessel.

Closest prior art FR-2469647 discloses a metal bottle for storing and transporting fluids under high pressure. The bottle is constituted by a section of a stainless steel tube having a circular cross-section which forms the body of the bottle. Each of the ends of the tube is tapered to a small diameter orifice. The bottle can have an over-moulding of steel having the same properties as the steel tube of the bottle body. A moulded plastic housing can be applied to the bottles for protection and to permit isolation of the bottles when stored in an upright position.

The present invention provides pressure containment vessel having an improved burst strength that does not suffer from the same drawbacks of prior reinforcement techniques. The vessel described herein can withstand the higher pressures of alternative refrigerants used in HVACR systems and also can be manufactured in a cost-effective and efficient manner, for example, without welding or joining metal shell parts together to form an outer shell that surrounds the vessel.

The vessel provided by the invention is defined in claim 1.

Optionally, the first tapered end portion of the monolithic sleeve and the second tapered end portion of the monolithic sleeve are cold-formed. The tubular body may contain a HVACR component, such as a filter/drier or a check valve or may operate as a muffler for the system.

According to the invention, a vessel can have a tubular body with a middle portion and a pair of transitional sections extending from opposite ends of the middle portion. The transitional sections terminate at respective ends of the tubular body and have a cross-sectional area that is less than the cross-sectional area of the middle portion. The vessel has a sleeve closely surrounding the tubular body. The sleeve has a middle portion adjacent to the middle portion of the tubular body and a pair of end portions adjacent the transitional sections of the tubular body.

A component for an HVAC system can have a shell with a cylindrical portion extending between respective end portions, an inlet at a first one of the end portions and an outlet at a second one of the end portions. The component includes a HVAC component inside the shell and a monolithic sleeve. The monolithic sleeve has a cylindrical portion that surrounds the cylindrical portion of the shell and a pair of respective cold formed end portions at least partially surrounding the respective end portions of the shell.

The invention also provides a method of forming a component for an HVAC system. The method includes forming a tubular body with a central portion and a pair of tapered end portions extending from opposite ends of the central portion and reinforcing the tubular body by telescoping a monolithic tubular sleeve over the tubular body and reducing the diameter of respective end portions of the sleeve, the end portions of the sleeve being adjacent to respective tapered portions of the tubular body.

Embodiments of this invention will now be described in further detail with reference to the accompanying drawings, in which:
Figure 1 is a schematic diagram of a HVACR system.
Figure 2A is an isometric view of a vessel.
Figure 2B is a cross-sectional view of the vessel of FIG. 2A taken along the lines 2B-2B.
Figure 3 is a cross-sectional view of another vessel.
Figure 4 is a cross-sectional view of another vessel.
Figure 5 is a cross-sectional view of another vessel.

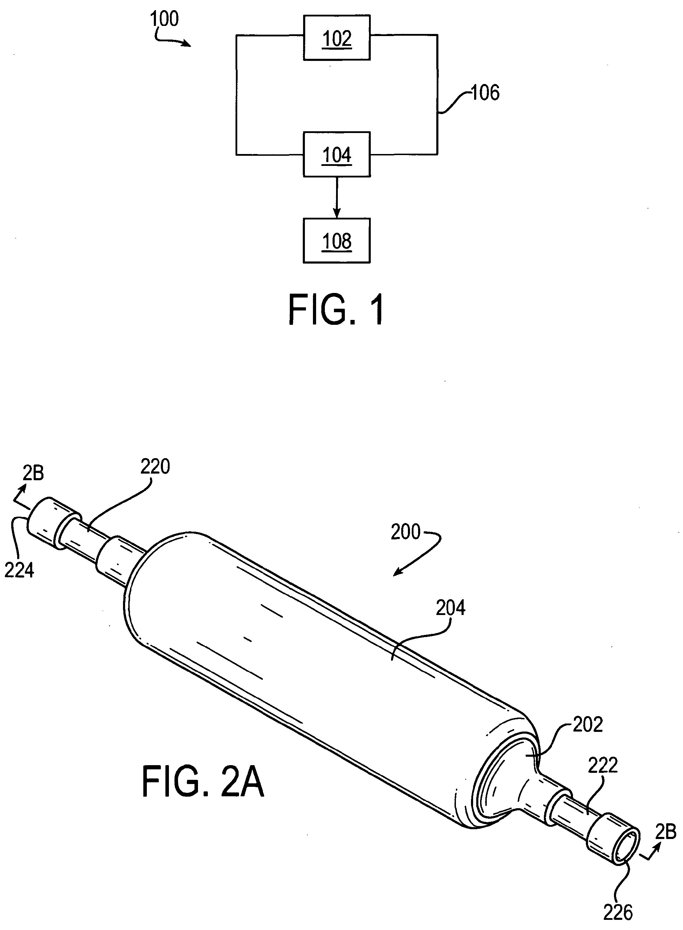

FIG. 1 shows a HVACR system 100 which includes a pressure containment vessel 102 that is coupled to one or more HVACR components 104 by conduits 106, such as copper tubes. The HVACR components 104 can include any of a number of components, such as heat exchanger(s), evaporator(s), condenser(s), compressor(s), pump(s), and the like. The system 100 can circulate a refrigerant to provide conditioned air to a space 108. For example, the system 100 can cool a space such as a refrigerator, freezer, refrigerated cabinet, etc., or to provide heat to a space.

The system 100 is charged with a refrigerant. The refrigerant may be a refrigerant that operates at a high pressure and/or an environmentally-friendly refrigerant. In one embodiment, the refrigerant is carbon dioxide (also referred to as R744). As noted above, systems that the use carbon dioxide refrigerant operate at significantly higher pressures than systems that use conventional hydrofluorocarbon refrigerants. Many conventional components of a HVACR system can withstand the higher operating pressures of alternative refrigerants, however, certain components of the system that have larger cross-sectional areas (such as a compressor or a pressure containment vessel 102, etc.) can be subject to very high hoop stresses from such refrigerants.

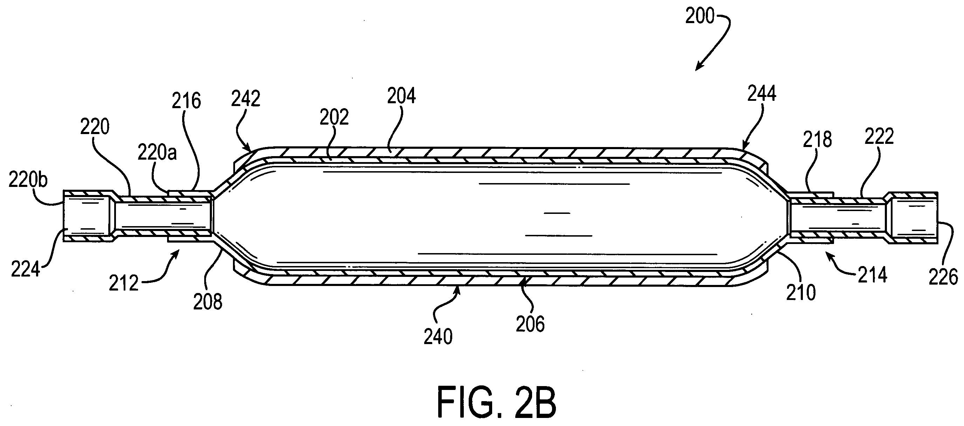

The pressure containment vessel 102 of FIG. 1 may take the form of vessel 200 shown in FIGS. 2A and 2B. The vessel 200 includes a tubular body 202 and a reinforcement sleeve 204 that surrounds the tubular body 202. By reinforcing the tubular body, the vessel is able to withstand the hoop stresses generated by the use of alternative refrigerants in HVACR systems.

The tubular body 202 has a middle portion 206 which may be generally cylindrical in shape. Although other tubular shapes are possible, shapes having a circular cross-section tend to be able to withstand greater internal pressures due to the even distribution of forces.

Extending from either end of the middle portion 206 are transitional sections 208 and 210 which terminate at respective end portions 212 and 214 of the tubular body 202. One or both of the transitional sections may be tapered from the generally wider middle portion 206 to generally narrower end portions 212 and 214. As shown best in the cross-sectional view of FIG. 2B, the cross-sectional area of the tubular body 202 at one or both of the transitional sections 208 and 210 is less than the cross-sectional area of the tubular body 202 at middle portion 206. In the illustrated embodiment, the transitional sections are generally frustoconical in shape.

The tubular body 202 can be in the form of a shell and may be formed by a spinning process during which a length of tube is formed into the transitional sections 208 and 210. The metal tube may be a thin-walled tube and may, for example, have a thickness of less than about 0.9 mm (0.035 inch). In one embodiment, the tubular body is formed from a copper tube having a 2.5 mm (0.10 inch) wall. The outer wall of the tubular body 202 may be thicker at the end portions 212 and 214 than at the middle portion 206. This may be the result of forming the tubular body 202 with the spinning process.

At either end of the tubular body are sockets 216 and 218. The sockets 216 and 218 can provide the inlet and the outlet, respectively, for a flow of fluid through the vessel. The sockets 216 and 218 can be coupled to respective extension members 220 and 222 for coupling the vessel to other component(s) of the system. For example, as shown in FIG. 2B, one end 220a of extension member 220 is coupled to the vessel at socket 216 and the other end 220b of the extension member is configured for coupling to another component of the system. The other extension member can be configured in a similar manner.

One or both of the extension members 220 and 222 can have flared openings 224 and 226 that are suitable for brazing. For example, the one or both of the openings can be configured for forming a brazed connection with copper tubing that is commonly used in HVACR systems. The extension members are formed from copper, which may be particularly useful when the vessel is installed as part of an HVACR system because the can eliminate the need for special brazing knowledge, materials, and skills for the user/installer. The flared openings 224 and 226 can define respective openings to the inside of the vessel. Fluid may flow into the vessel via one of the openings (e.g., opening 224) and out of the vessel via the other opening (e.g., opening 226).

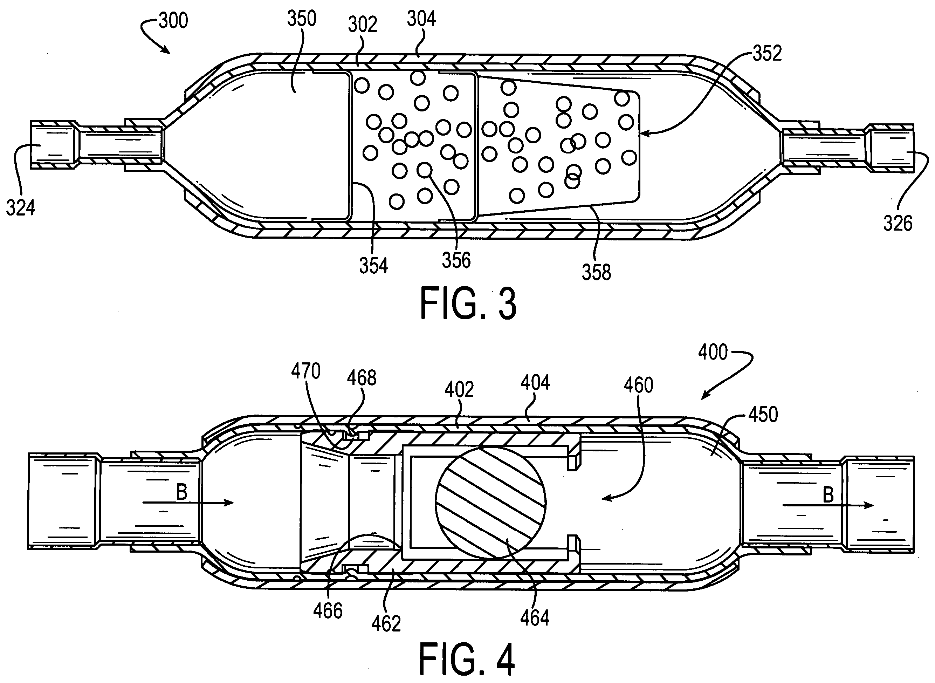

Adjacent to and surrounding at least part of the tubular body 202 is the sleeve 204. The sleeve 204 can have a similar shape to the tubular body 202. The sleeve 204 may have a middle portion 240 adjacent to the middle portion 206 of the tubular body 202 and respective end portions 242 and 244 adjacent to and surrounding at least part of the transition portions 206 of the tubular body. One or both of the end portions 242 and 244 can be tapered such that the cross-sectional area of the sleeve 204 at the end portions 242 and 244 is less than the cross-sectional area of the sleeve 204 at the middle portion 240. The sleeve may be substantially the same length as the tubular body, or may be shorter than the tubular body. As shown in the embodiment of FIGS. 2A and 2B, the sleeve closely surrounds at least part of the transitional portions 208 and 210 of the tubular body 202. As shown in FIG. 4, the sleeve closely surrounds the tubular body and extends substantially the length of the body between respective end sockets.

The tubular body 202 and sleeve 204 can be assembled by telescoping the sleeve 204 over the tubular body 202 and reducing the diameter of the end portion(s) 242 and 244 of the sleeve that are adjacent to the tapered portion(s) 208 and 210 of the tubular body. In one embodiment, the end portion(s) of the sleeve are cold formed to the desired shape. For example, the end portion(s) can be cold formed by pressing the end portion axially until the end portion(s) of the sleeve closely match the shape of the transitional portion(s) of the tubular body.

The tubular body 202 and the sleeve 204 may be sized such that the sleeve 204 forms a slip fit with the tubular body leaving little to no space between the tubular body and the surrounding sleeve. For example, the inner diameter of the sleeve may be slightly larger than the outer diameter of the tubular body. In this manner, the tubular body 202 and the sleeve are closely fit to one another. When the tubular body is subjected to high internal pressures, the outer walls of the tubular body will be constrained from expansion by the sleeve. This increases the strength of the vessel and the hoop stress that the vessel can withstand. When the inside of the tubular body is pressurized, the tubular body may expand in the radial direction. However, the extent to which the tubular body can expand is constrained by the sleeve, thereby preventing a failure (such as a blowout) of the tubular body.

When assembled, the sleeve 204 closely surrounds the tubular body 202 thereby increasing the effective strength of the vessel such that the vessel can withstand higher internal pressures, e.g., the pressures associated with the use of alternative refrigerants. The phrase "closely surrounds" is intended to mean that the two components are touching or in such close proximity to one another that there is at most a small or insignificant gap between the components. By closely surrounding the tubular body, the sleeve can constrain the radial expansion of the tubular member when the tubular body is subjected to internal pressure. In one embodiment, the gap between the sleeve and the tubular body is less than about 6.4 mm (0.25 inch). In another embodiment, the gap is less than about 2.5 mm (0.1 inch). In another embodiment, the gap is less than 1.27 mm (0.05 inch). In another embodiment, the sleeve and the tubular body are touching one another.

A monolithic sleeve (204) (as used herein, "monolithic" means a substantially uniform as a whole) may be formed from a tube, including but not limited to a welded tube or a seamless tube. The metal tube may be drawn or extruded to size.

Inside the tubular body 202 may be any of a number of HVACR components, such as a filter-drier, desicant (such as beaded or molded core), check valve, strainer (such as a screen mesh strainer), noise attenuating baffles or muffler, and the like.

An embodiment of a pressure containment vessel 300 containing a filter-drier assembly is shown in FIG. 3. Many of the components of vessel 300 are similar to those described with respect to FIGS. 2A and 2B. For purposes of brevity, similar components will not be described again in detail.

As shown in FIG. 3, the vessel 300 includes a tubular body 302 and a sleeve 304. The inside 350 of the tubular body 302 contains a filter-drier assembly 352. The filter-drier assembly 352 includes a perforated baffle element 354, a sieve 356, which may contain an adsorbent or desiccant, and a screen assembly 358. The baffle element, sieve, and screen assembly may be press fitted in the tubular body 302.

Fluid can flow into the filter-drier via opening 324 and into the inside 350 of the tubular body 302. The fluid then passes though the baffle 354. The baffle 354 may keep loose desiccant contained during assembly and/or handling of the vessel, for example, by an end customer. The baffle also keeps the desiccant from churning due to refrigerant flow which may shorten the life of the product by attrition. The fluid then passes through the sieve 356, which may be a molecular sieve which removes moisture from the refrigerant by adsorption. From the sieve, the fluid passes through the screen assembly 358, which may capture harmful particulate contaminates in the refrigerant. From the screen assembly, the fluid exits the vessel 300 via the second opening 326.

Another embodiment of a pressure containment vessel 400 containing a HVACR component is shown in FIG. 4. As with FIG. 3, many of the components of vessel 400 are similar to those described with respect to FIGS. 2A and 2B. For purposes of brevity, those components will not be described again in detail.

The vessel 400 includes a tubular body 402 and a sleeve 404. The inside 450 of the tubular body 402 includes a check valve assembly 460. The check valve assembly 460 of FIG. 4 is a ball-type check valve assembly. The check valve assembly includes a ball cylinder 462, a ball 464 (such as a steel ball) and a seal plug 466. The ball cylinder 462 may be coupled to the tubular body 402 by press fit. Additionally or alternatively, the tubular body 402 may include an indent 468 which may engage a notch 470 in the ball cylinder, thereby holding it within the vessel 400. In the embodiment of FIG. 4, fluid is free to flow through the vessel in one direction (e.g., as indicated by arrows B), but upon back flow, the ball 464 will engage the ball seal plug 466 to prevent back flow though the vessel.

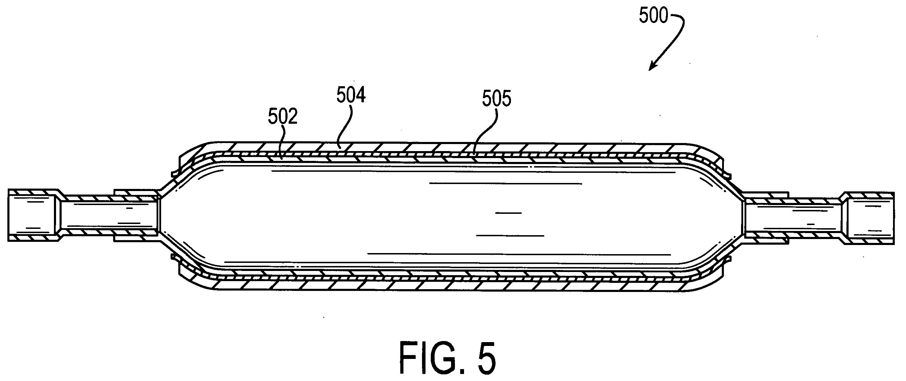

Another embodiment of a pressure containment vessel 500 is shown in FIG. 5. As with FIG. 3, many of the components of vessel 500 are similar to those described with respect to FIGS. 2A and 2B. For purposes of brevity, those components will not be described again in detail.

The vessel 500 includes a tubular body 502, a sleeve 504, and at least one intermediate layer 505. The intermediate layer 505 may be formed from a dielectric material. The dielectric material may be a flexible material. In one embodiment, the dielectric material is polyvinylchloride (PVC), and may, for example, be PVC heat shrink tubing. Other suitable materials may be used. The intermediate layer 505 can fill any extra space or gap between the tubular body 502 and the sleeve 504. Although shown only with respect to one embodiment, it should be appreciated that an intermediate layer can be added to any embodiment of the vessel.

Forming the vessel from two dissimilar metals can form a galvanic cell that will accelerate corrosion. The intermediate layer 505 can be formed from a dielectric material that electrically insulates the tubular body 502 from the sleeve 504. Additionally or alternatively, the sleeve in this or other embodiments may be anodized or otherwise treated to passivate the surface reduce potential corrosion.

## Claims

1. A vessel (200) comprising:
a tubular body (202) having a middle portion (206) and a first tapered portion (208) extending from a first end of the middle portion to a first end (212) which is narrower than the middle portion and a second tapered portion (210) extending from a second end of the middle portion to a second end (214) which is narrower than the middle portion, and
a monolithic reinforcement sleeve (204) which surrounds the tubular body and has a first tapered end portion (242) adjacent to and surrounding at least part of the first tapered portion of the tubular body and a second tapered end portion (244) adjacent to and surrounding at least part of the second tapered portion of the tubular body,
**characterised in that** the tubular body is formed from a copper tube by spinning, and the vessel includes a first tubular member (220) which is connected to the tubular body (202) at the first end (212) and a second tubular member (222) which is connected to the tubular body at the second end (214), each of the first and second tubular members being formed from copper and being configured for forming a brazed connection with copper tubing, the monolithic reinforcement sleeve being in the form of an aluminium tube.

2. The vessel of claim 1, in which an inlet at the first end of the tubular body and an outlet at the second end of the tubular body comprise respective sockets (216, 218) extending from respective tapered portions (208, 210) of the tubular body (202).

3. The vessel of claim 1 or claim 2, in which the middle portion (206) of the tubular body (202) is cylindrical and the tapered portions (208, 210) of the tubular body are frustoconical.

4. The vessel of any one of claims 1 to 3, further comprising a filter/drier (352) inside the tubular body (202).

5. The vessel of any one of claims 1 to 4, further comprising a check valve (460) inside the tubular body (202).

6. The vessel of any one of claims 1 to 5, further comprising an intermediate layer (505) between the tubular body (502) and the reinforcement sleeve (504).

7. The vessel of any one of claims 1 to 6, in which the sleeve (204) is anodized.

8. A method of forming a vessel (200) for use in an HVAC system, comprising:
forming a tubular body (202) from a copper tube by spinning so that the body has a middle portion (206) and a first tapered portion (208) extending from a first end of the middle portion (206) to a first end (212) which is narrower than the middle portion (206) and a second tapered portion (210) extending from a second end of the middle portion to a second end (214) which is narrower than the middle portion,
connecting a first tubular member (220) to the tubular body (200) at the first end (212) and a second tubular member (222) to the tubular body (202) at the second end (214), each of the first (220) and second (222) tubular members being formed from copper, and each of them being connected to the tubular body (202) by brazing,
fitting a monolithic reinforcement sleeve (204) in the form of an aluminium tube to the tubular body (200) by sliding the sleeve (204) over the tubular body so that it surrounds the tubular body (200), and
reducing the diameter of the sleeve (204) first and second end portions of the sleeve so that they become tapered with the first tapered end portion (242) surrounding at least part of the first tapered portion of the tubular body and the second tapered end (244) portion surrounding at least part of the second tapered portion of the tubular body (200).

## Patentansprüche

1. Ein Gefäß (200) aufweisend:
einen rohrförmigen Körper (202) mit einem Mittelabschnitt (206) und einem ersten sich verjüngenden Abschnitt (208), welcher sich von einem ersten Ende des Mittelabschnitts zu einem ersten Ende (212) erstreckt, das enger ist als der Mittelabschnitt, und einem zweiten sich verjüngenden Abschnitt (210), welcher sich von einem zweiten Ende des Mittelabschnitts zu einem zweiten Ende (214) erstreckt, das enger ist als der Mittelabschnitt, und
eine monolithische Verstärkungshülse (204), welche den rohrförmigen Körper umgibt und einen ersten sich verjüngenden Endabschnitt (242), der zu zumindest einem Teil des ersten sich verjüngenden Abschnitts des rohrförmigen Körpers benachbart ist und diesen umgibt, und einen zweiten sich verjüngenden Endabschnitt (244) hat, der zu zumindest einem Teil des zweiten sich verjüngenden Abschnitts des rohrförmigen Körpers benachbart ist und diesen umgibt,
**dadurch gekennzeichnet, dass**
der rohrförmige Körper ausgehend von einem Kupferrohr durch Formdrücken geformt ist, und dass das Gefäß ein erstes rohrförmiges Bauteil (220), welches mit dem rohrförmigen Körper (202) an dem ersten Ende (212) verbunden ist, und ein zweites rohrförmiges Bauteil (222) umfasst, welches mit dem rohrförmigen Körper an dem zweiten Ende (214) verbunden ist, wobei das erste und das zweite Bauteil jeweils aus Kufper geformt sind und dazu eingerichtet sind, eine Lötverbindung mit Kupferrohren einzugehen, wobei die monolithische Verstärkungshülse in Form einer Aluminiumröhre gegeben ist.

2. Das Gefäß nach Anspruch 1, bei welchem ein Einlass an dem ersten Ende des rohrförmigen Körpers und ein Auslass an dem zweiten Ende des rohrförmigen Körpers entsprechende Stutzen (216, 218) aufweisen, welche sich von jeweils sich verjüngenden Abschnitten (208, 210) des rohrförmigen Körpers (202) erstecken.

3. Das Gefäß nach Anspruch 1 oder Anspruch 2, bei welchem der Mittelabschnitt (206) des rohrförmigen Körpers (202) zylindrisch ist und die sich verjüngenden Abschnitte (208, 210) des rohrförmigen Körpers kegelstumpfförmig sind.

4. Das Gefäß nach einem der Ansprüche 1 bis 3, welches ferner einen Filter/Trockner (352) in dem rohrförmigen Körper (202) aufweist.

5. Das Gefäß nach einem der Ansprüche 1 bis 4, welches ferner ein Rückschlagventil (460) in dem rohrförmigen Körper (202) aufweist.

6. Das Gefäß nach einem der Ansprüche 1 bis 5, welches ferner eine Zwischenschicht (505) zwischen dem rohrförmigen Körper (502) und der Verstärkungshülse (504) aufweist.

7. Das Gefäß nach einem der Ansprüche 1 bis 6, bei welchem die Hülse (204) eloxiert ist.

8. Ein Verfahren zur Herstellung eines Gefäßes (200) zur Verwendung in einem HVAC-System umfassen:
Bilden eines rohrförmigen Körpers (202) aus einem Kupferrohr durch Formdrücken, so dass der Körper einen Mittelabschnitt (206) und einen ersten sich verjüngenden Abschnitt (208), welcher sich von einem ersten Ende des Mittelabschnitts (206) zu einem ersten Ende (212) erstreckt, welches enger ist als der Mittelabschnitt (206), und einen zweiten sich verjüngenden Abschnitt (210) hat, welcher sich von einem zweiten Ende des Mittelabschnitts zu einem zweiten Ende (214) erstreckt, welches enger ist als der Mittelabschnitt.
Verbinden eines ersten rohrförmigen Bauteils (220) mit dem rohrförmigen Körper (200) am ersten Ende (212) und ein zweites rohrförmiges Bauteil (222) mit dem rohrförmigen Körper (202) am zweiten Ende (214), wobei jedes der ersten (220) und zweiten (222) rohrförmigen Bauteile aus Kupfer geformt ist, und jedes dieser Teile mit dem rohrförmigen Körper (202) durch Löten verbunden wird,
Anbringen einer monolithischen Verstärkungshülse (204) in Form eines Aluminiumrohrs an dem rohrförmigen Körper (200) durch Überstülpen der Hülse (204) über den rohrförmigen Körper, so dass dieser den rohrförmigen Körper (200) umgibt, und
Reduzieren des Durchmessers der ersten und zweiten Endabschnitte der Hülse (204), so dass diese dazu übergehen, sich zu verjüngen, wobei der erste sich verjüngende Endabschnitt (242) zumindest einen Teil des ersten sich verjüngenden Abschnitts des rohrförmigen Körpers umgibt und der zweite sich verjüngende Endabschnitt (244) zumindest einen Teil des zweiten sich verjüngenden Abschnitts des rohrförmigen Körpers (200) umgibt.

## Revendications

1. Récipient (200) comprenant :
un corps tubulaire (202) ayant une partie médiane (206) et une première partie effilée (208) s'étendant d'une première extrémité de la partie médiane à une première extrémité (212) qui est plus étroite que la partie médiane et une deuxième partie effilée (210) s'étendant d'une deuxième extrémité de la partie médiane à une deuxième extrémité (214) qui est plus étroite que la partie médiane, et
un manchon de renfort monolithique (204) qui entoure le corps tubulaire et qui a une première partie d'extrémité effilée (242) adjacente à la première partie effilée du corps tubulaire et entourant au moins une partie de celle-ci et une deuxième partie d'extrémité effilée (244) adjacente à la deuxième partie effilée du corps tubulaire et entourant au moins une partie de celle-ci,
**caractérisé en ce que** le corps tubulaire est formé à partir d'un tube en cuivre par repoussage, et le récipient comporte un premier élément tubulaire (220) qui est relié au corps tubulaire (202) au niveau de la première extrémité (212) et un deuxième élément tubulaire (222) qui est relié au corps tubulaire au niveau de la deuxième extrémité (214), chacun des premier et deuxième éléments tubulaires étant formé à partir de cuivre et étant configuré pour former une liaison brasée avec des tubes en cuivre, le manchon de renfort monolithique étant sous la forme d'un tube en aluminium.

2. Récipient de la revendication 1, dans lequel une entrée au niveau de la première extrémité du corps tubulaire et une sortie au niveau de la deuxième extrémité du corps tubulaire comprennent des douilles respectives (216, 218) s'étendant à partir de parties effilées respectives (208, 210) du corps tubulaire (202).

3. Récipient de la revendication 1 ou 2, dans lequel la partie médiane (206) du corps tubulaire (202) est cylindrique et les parties effilées (208, 210) du corps tubulaire sont tronconiques.

4. Récipient de l'une quelconque des revendications 1 à 3, comprenant en outre un filtre/sécheur (352) à l'intérieur du corps tubulaire (202).

5. Récipient de l'une quelconque des revendications 1 à 4, comprenant en outre un clapet anti-retour (460) à l'intérieur du corps tubulaire (202).

6. Récipient de l'une quelconque des revendications 1 à 5, comprenant en outre une couche intermédiaire (505) entre le corps tubulaire (502) et le manchon de renfort (504).

7. Récipient de l'une quelconque des revendications 1 à 6, dans lequel le manchon (204) est anodisé.

8. Procédé de formation d'un récipient (200) pour une utilisation dans un système de chauffage, de ventilation et de conditionnement d'air, dit système CVCA, comprenant le fait :
de former un corps tubulaire (202) à partir d'un tube en cuivre par repoussage de sorte que le corps ait une partie médiane (206) et une première partie effilée (208) s'étendant d'une première extrémité de la partie médiane (206) à une première extrémité (212) qui est plus étroite que la partie médiane (206) et une deuxième partie effilée (210) s'étendant d'une deuxième extrémité de la partie médiane à une deuxième extrémité (214) qui est plus étroite que la partie médiane,
de relier un premier élément tubulaire (220) au corps tubulaire (200) au niveau de la première extrémité (212) et un deuxième élément tubulaire (222) au corps tubulaire (202) au niveau de la deuxième extrémité (214), chacun des premier (220) et deuxième (222) éléments tubulaires étant formé à partir de cuivre, et chacun d'eux étant relié au corps tubulaire (202) par brasage,
d'ajuster un manchon de renfort monolithique (204) sous la forme d'un tube en aluminium au corps tubulaire (200) en faisant glisser le manchon (204) sur le corps tubulaire de sorte qu'il entoure le corps tubulaire (200), et
de réduire le diamètre des première et deuxième parties d'extrémité du manchon (204) de sorte qu'elles deviennent effilées avec la première partie d'extrémité effilée (242) entourant au moins une partie de la première partie effilée du corps tubulaire et la deuxième partie d'extrémité effilée (244) entourant au moins une partie de la deuxième partie effilée du corps tubulaire (200).
